# EUROPEAN PATENT APPLICATION

(11) **EP 1 097 912 A2**
(43) Date of publication of application: **09.05.2001**
(21) Application number: 00123413.7
(22) Date of filing: 02.11.2000
(51) Int. Cl.: C05B 1/00, C05F 5/00, C05F 11/00

(54) **Fertilizing composition containing phosphorite and tannins**

(30) Priority: 03.11.1999 IT MI992296
(71) Applicant: Agroqualita S.r.l., 20123 Milano (IT)
(72) Inventor: Miele, Sergio, 56123 Pisa (IT); Bargiacchi, Enrica, 57012 Castiglioncello (IT)
(74) Representative: Modiano, Guido, Dr.-Ing.

(57) **Abstract**

A fertilizing composition for organic farming, based on the association of a soft ground rock phosphate or phosphorite in ground form with an organic product of vegetable origin which is based on tannins.

## Description

The present invention relates to a fertilizing composition which is particularly suitable for organic farming.

In particular, the present invention relates to a fertilizing composition which has high phosphorus assimilability and is specifically indicated for use in the field of organic farming.

The expression "organic farming" designates the set of agronomic techniques, based on natural interactions between viable organisms, pedoclimate and human action, which excludes the use of synthetic chemical products.

This specific field has long been regulated by the EEC by issuing a number of regulations, subsequently transposed by the various national law systems, concerning the technical means, such as fertilizers, that can be used in organic farming. The relevant standards are constituted by the following regulations: 2092/91, 94/92, 1535/92, 2078/92, 2083/92, 3457/92, 3713/92, 207/93, 1593/93, 2608/93, 468/94, 688/94, 1468/94, 2381/94, 2580/94, 1201/95, 1202/95, 1935/95, 418/96, 522/96, 314/97, 345/97, 1488/97, 1367/98, 1900/98.

The above cited regulations prescribe that among phosphatic fertilizers, soft ground rock phosphate or phosphorite is the only product having a fertilizing action which does not have limitations of use linked to the type of soil where the applications occur (as instead occurs for aluminum calcium phosphate) or linked to need recognized by the inspection body or inspection authority, as occurs for example in the case of phosphatic slag.

Natural phosphates are compounds which are characterized in that they contain appreciable quantities of apatites having the general formula Ca₅X(PO₄)₃, where X is chosen among F, Cl, OH or a carbonate group (CO₃)_{1/2}, sometimes mixed with calcite and calcium fluoride.

Among the sources of natural phosphates, those that originate from Northern Africa and are of sedimentary origin are termed "soft ground rock phosphates" owing to their physical characteristics and to the high presence of gypsum. This kind of natural phosphate is usually chosen for direct applications, since it is characterized by a high specific surface (1 g of product ground to 104-107 µ has a surface of 14-19 m² against 3-7 m² of natural phosphates from American sources) and by a significant reactivity in citric acid (Lowrison G.C., 1989, Fertilizer Technology, Ellis Horwood Ltd. United Kingdom), and both characteristics are potentially connected to the soil solubility of the phosphorus contained therein.

However, it has been found that the fertilizing efficiency of soft ground rock phosphates is very low in soils having a pH above 7-7.5, which constitute the vast majority of the cultivated farming surfaces in EU countries.

This drawback has been solved, in the field of conventional non-organic farming, by increasing the plant bioavailability of the phosphorus that is present in natural phosphates by way of their reaction with mineral acids (sulfuric, nitric and phosphoric acid and mixtures thereof), thus providing the wide class of phosphatic and phosphatic nitrogenous chemical fertilizers.

This solution is instead forbidden, by currently applicable statutory provisions, for products used in organic farming. This is a threat to the long-term productivity of organic cultivations owing to the gradual impoverishment of phosphorus on the part of organic farming soils.

In the current art, therefore, there is the need to have new fertilizing preparations indicated for use in organic-type cultivations which allow to meet the phosphorus demand of the soil in full compliance with the applicable statutory provisions.

It has now been found unexpectedly that it is possible to prepare a fertilizing composition with high assimilability of the phosphorus contained therein which fully complies with the principles of organic farming and has many application advantages with respect to soft ground rock phosphates or phosphorites, which are currently used as such or mixed with various organic substances allowed in the formulation of organic-mineral fertilizers.

In formulating the solution to the above problems, the Applicant has taken into account the fact that the statutory provisions that govern organic farming allow for the unlimited use, as cultivation fertilizers, of organic products and byproducts of plant origin and derivatives of wood that has not been subjected to chemical treatment and, in case of need recognized by the inspection body or inspection authority, also of products of animal origin and elemental sulfur.

Within the scope of the present invention, the aim is to provide a fertilizing composition with high phosphorus assimilability which can be used in organic farming.

Another object of the present invention is to provide a fertilizing composition which includes a natural component having a high phosphorus content which is capable of preventing the impoverishment of this element in cultivated soil, following the dictums of organic farming.

In view of these aims and these and other objects which will become better apparent hereinafter, a fertilizing composition for organic farming is provided according to the present invention, which is characterized in that it comprises a soft ground rock phosphate or phosphorite in ground form in association with a tannin based vegetable product.

The soft ground rock phosphate or phosphorite that is used, advantageously has a P₂O₅ content of more than 25% by weight, of which at least 55% is soluble in 2% formic acid, and a grinding fineness by way of which at least 95% passes the screen with 0.063 mm mesh.

According to a preferred embodiment of the invention, said tannins are extracted physically preferably from chemically untreated wood after felling the plant. Conveniently, the tannin extract derives from a purely physical process for leaching the wood in chips exclusively in water. Preferably, the wood used is chestnut wood and is not treated chemically after gathering.

The leachate is then concentrated with an osmosis process until a product preferably having a tannin content from 40 to 50% by weight is obtained.

The process for extraction from the untreated wood produces a vegetable extract with a high tannin content.

Advantageously, the tannin extract content contributes to the formulation of the composition from 1 to 40%, preferably 1 to 10%, by weight of the dry fraction.

It has been found unexpectedly that the association of a soft ground rock phosphate or phosphorite in ground form with an organic product of vegetable origin based on tannins provides a synergy of fertilizing action which is rendered evident by the abundance of biological crops obtained from the treated soils.

According to a preferred embodiment of the invention, the formulation of the fertilizing composition also comprise a compound or a natural nitrogenous or phosphatic-nitrogenous organic fertilizer.

Examples of nitrogenous and phosphatic-nitrogenous organic fertilizers that can be used in the invention are: animal blood, degreased and dried hoof powder, horn powder, bone powder, even if degelatinized, bone black (animal charcoal), fishmeal, meatmeal, feather, hear and 'chiquette' meal, wool, fur, hair, dairy products, oilseed cake meal, cocoa husk, malt culms, dried excrement of various animals, all produced in compliance with the regulations applicable to organic farming.

In particular, degreased and dried animal blood is produced with the spray-drying method which operates at high temperatures and pressures but for short times and with large air volumes, so as to obtain a product which advantageously has a nitrogen content of more than 13%, a humidity content of less than 7% and a water solubility of more than 85%.

In the scope of the invention, the expression "spray-drying technique" designates a technique which allows to easily dry heat-sensitive products in short times (3-5 seconds), since a liquid state which is finely dispersed in a region of gas at high temperature is produced. Due to the high surface/volume ratio, until the particle becomes fully dry evaporation continues and the temperature of the solid does not approach the temperature at the exit of the dryer.

According to another embodiment, the composition according to the invention further comprises elemental sulfur to complete the fertilizing activity. Conveniently, elemental sulfur is used having the characteristics defined by EC directive 76/116 as amended by EC directive 89/124.

The fertilizing composition according to the invention is advantageously provided in the form of granules or pellets having dimensions from 0.1 to 5 mm, preferably from 0.1 to 1.5 mm, even more preferably from 0.5 to 1 mm.

It has been found that the fertilizing and phosphorus integration capacities are optimized when the composition is used, in organic farming, for bedding during sowing or planting of grassy and arboreal cultivations.

The doses of use of the fertilizing compounds vary according to the type of cultivation and soil to be treated, and advantageously vary from a minimum of 100 to a maximum of 400 kg/ha when the dimensions of the granules or pellets are from 1.5 to 5 mm and from 30 to 200 kg/ha when the particle size is on the order of 0.1-1.5 mm.

The fertilizers according to the present invention can be prepared by using conventional-type mixers, mixing the starting components in solid or liquid form, the latter being optionally wet in rotating drums in order to facilitate a more uniform distribution, which is followed by drawing for pelletized products or by granulation with optional final drying, screening and recirculation of the granules having a diameter which is greater or smaller than the intended diameter.

The following examples are given only by way of illustration of the present invention and must not be understood as limiting its scope as defined by the appended claims.

### EXAMPLE 1

55 kg of soft ground rock phosphate or phosphorite, 30 kg of meatmeal and 5 kg of elemental sulfur were mixed in a powder mixer. An extract of tannins originating from the extraction of untreated chestnut wood was then added until an amount equal to the addition of 10 kg of substances was reached. After drying and screening on a sieve filter with 0.063-mm mesh, a granular fertilizer was obtained which had granules with a particle size equal to approximately 1 mm.

### EXAMPLE 2

The fertilizing composition prepared according to the method described in Example 1 was used for local application along rows of fruit-bearing garden plants in an amount equal to 250 kg/ha.

At harvest time, the treated plants yielded high productivity or yield in terms of fruit production.

The disclosures in Italian Patent Application No. MI99A002296 from which this application claims priority are incorporated herein by reference.

## Claims

1. A fertilizing composition for organic farming, characterized in that it comprises a soft ground rock phosphate or phosphorite in ground form in association with a tannin based vegetable product.

2. The composition according to claim 1, characterized in that said tannin based vegetable product is extracted from wood by a physical process.

3. The composition according to claim 1 or 2, further comprising a natural nitrogenous or phosphatic-nitrogenous organic compound.

4. The composition according to claim 3, characterized in that said nitrogenous or phosphatic-nitrogenous organic compound is animal blood, degreased and dried with a spray-drying technique.

5. The composition according to any one of claims 1 to 4, further comprising a natural sulfur.

6. The composition according to any one of claims 1 to 5, characterized in that it is in the form of granules or pellets with a size from 0.1 to 5 mm.

7. The composition according to claim 6, characterized in that said size of the granules or pellets is from 0.1 to 1.5 mm.

8. The composition according to claim 7, characterized in that said size of the granules or pellets is from 0.5 to 1 mm.

9. Use of a composition according to any one of claims 1 to 8 as fertilizer for organic farming.

10. Use according to claim 9, by means of localized applications during sowing or planting of the cultivations.
